(19) Europäisches Patentamt
European Patent Office
Office européen des brevets

(11) Veröffentlichungsnummer: **0 061 685**
**B1**

(12) # EUROPÄISCHE PATENTSCHRIFT

(45) Veröffentlichungstag der Patentschrift: **02.01.85**

(51) Int. Cl.³: **C 08 L 1/28**, E 21 B 43/22

(21) Anmeldenummer: **82102353.8**

(22) Anmeldetag: **22.03.82**

(54) **Gelbildende Zusammensetzung auf der Basis eines Celluloseethers, ein Verfahren zur Herstellung eines Gels, ein Verfahren zur reversiblen Aufhebung des Gels und ihre Verwendung bei der Sekundärförderung von Erdöl.**

(30) Priorität: **31.03.81 DE 3112946**

(43) Veröffentlichungstag der Anmeldung: **06.10.82 Patentblatt 82/40**

(45) Bekanntmachung des Hinweises auf die Patenterteilung: **02.01.85 Patentblatt 85/1**

(84) Benannte Vertragsstaaten: **DE GB NL**

(56) Entgegenhaltungen:
**EP-A-0 051 181**
**US-A-4 035 195**

(73) Patentinhaber: **HOECHST AKTIENGESELLSCHAFT, Postfach 80 03 20, D-6230 Frankfurt am Main 80 (DE)**

(72) Erfinder: **Brandt, Lothar, Dr., Alfred-Schumann-Strasse 23, D-6200 Wiesbaden-Schierstein (DE)**
Erfinder: **Holst, Arno, Dr., Drususstrasse 3, D-6200 Wiesbaden (DE)**

**EP 0 061 685 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine gelbildende Zusammensetzung auf der Basis von a) Wasser, b) einem wasserlöslichen Cellulosemischether mit mindestens einem phosphorhaltigen Ethersubstituenten und c) einem vernetzend wirkenden Salz. Weiterhin umfaßt die Erfindung ein Verfahren zur Herstellung eines Gels aus dieser Zusammensetzung, ein Verfahren zur reversiblen Aufhebung des so erzeugten Gels und die Verwendung der gelbildenden Zusammensetzung bei der Sekundärförderung von Erdöl.

Handelsübliche Typen wasserlöslicher Celluloseether zeigen in wäßriger Lösung – abhängig u. a. von ihren mittleren Viskositätswerten – newtonsches oder strukturviskoses Fließverhalten. Sie zeigen im allgemeinen ohne besondere Modifizierungen keine oder nur eine geringe Tendenz zu thixotropem Fließen oder zur Gelbildung im in der Praxis sehr gebräuchlichen Konzentrationsbereich von bis zu 2%, in dem Viskositäten bis über $10^5$ mPa · s (gemessen in 2%iger wäßriger Lösung bei 20°C nach Höppler) erzielt werden können. Man kann annehmen, daß die gelösten polymeren Celluloseethermoleküle in diesen wäßrigen Lösungen untereinander nur schwache Wasserstoffbrückenbindungen ausbilden, deren Bindungsstärke zu gering ist, um dem wäßrigen System eine gelartige Struktur zu verleihen. Je nach Art des Celluloseethers können bestimmte modifizierte Zusätze zu der wäßrigen Lösung chemische Vernetzungsreaktionen auslösen, so daß zwischen einzelnen oder mehreren Celluloseether-Polymerketten stabile chemische Bindungen entstehen, die zur Bildung einer stabilen Gelstruktur über das gesamte Volumen des wäßrigen Systems führen. Wenn die Konzentration des Celluloseethers und/oder des vernetzenden Zusatzes im wäßrigen System niedrig gehalten werden, kommt es häufig nicht zu einer Gelbildung, sondern nur zu einer Viskositätserhöhung. Die letztere Erscheinung ist oftmals dann nützlich, wenn es nur zu einer verdickenden Funktion des Celluloseethers kommen soll, da auf diesen Einsatzgebieten – verglichen mit unmodifizierten Celluloseethertypen – dann niedrigere Einsatzmengen an Celluloseether zur Anwendung kommen können.

In der Nomenklatur und zur Charakterisierung der Celluloseether sind insbesondere folgende Abkürzungen und Parameter gebräuchlich, die in den folgenden Ausführungen dann auch verwendet werden:

C = Cellulose, Alk = Alkyl, M = Methyl, E = Ethyl, HAlk = Hydroxyalkyl, HE = Hydroxyethyl, HP = Hydroxypropyl, HB = Hydroxybutyl, CAlk = Carboxyalkyl, CM = Carboxymethyl, NaCM = Natriumcarboxymethyl, CE = Carboxyethyl, SAlk = Sulfonoalkyl, SE = Sulfonoethyl, PAlk = Phosphonoalkyl, PM = Phosphonomethyl, PP = 3-Phosphonopropyl, (MPM) = Methylphosphino-methyl, (MPP) = 3-Methylphosphino-propyl, NaCMHE = Natriumcarboxymethyl-hydroxyethyl, MPM = Methyl-phosphonomethyl;

DS = Substitutionsgrad, d. h. die mittlere Anzahl von substituierten OH-Gruppen pro Anhydro-o-glucose-Einheit, er liegt bei Cellulose im Bereich von 0,0 bis 3,0;
MS = molarer Substitutionsgrad, d. h. die mittlere Anzahl von Molen des substituierenden Reagens, die pro Mol Anhydro-o-glucose-Einheit etherartig gebunden werden, er kann bei Cellulose auch größer als 3,0 sein und wird normalerweise anstelle des DS zur Charakterisierung solcher Substituenten am Celluloseether verwendet, die durch Mehrfachsubstitution an einer OH-Gruppe entstehen können (bei Hydroxyalkylgruppen);
$DS_{PM}$ = Substitutionsgrad des Celluloseethers, bezogen auf den Phosphonomethylsubstituenten;
$MS_{HE}$ = molarer Substitutionsgrad des Celluloseethers, bezogen auf den Hydroxyethylsubstituenten.

Die in Richtung einer starken Viskositätserhöhung beeinflußbaren bzw. mit Zusätzen vergelenden Celluloseether, wozu insbesondere solche mit anionischen Substituenten wie Carboxymethylgruppen im Molekül gehören, werden häufig bei der Sekundärförderung von Erdöl eingesetzt. Unter Sekundärförderung sind dabei die Arbeitsweisen bei der Erdölgewinnung zu verstehen, die nach der durch natürliche oder zusätzlich unterstützte natürliche Kräfte (wie Druck durch Erdgas oder durch Aufbrechen von unterirdischen Formationen) verursachten Primärförderung einsetzen und bei steigenden Erlösen für Rohöl aus ökonomischen und ökologischen Gründen immer interessanter und wichtiger werden. Diese Sekundärförderung von Erdöl aus unterirdischen Formationen wird beispielsweise durch Flüssigkeiten verursacht, die über zusätzliche Bohrlöcher (Injektionen) in die Formation eingegeben werden, um das Erdöl aus der Formation zu dem eigentlichen Produktionsbohrloch hin zu verdrängen. Diesen Flüssigkeiten kann man z. B. ein wasserlösliches Hydrokolloid wie natürliche Polymerisate (z. B. Xanthanharz), einen Celluloseether oder ein Acrylpolymeres zusetzen, um ihre Viskosität zu erhöhen und damit das Erdöl besser und wirksamer verdrängen zu können. Dabei werden u. a. folgende Bedingungen an die einzusetzenden Hydrokolloide gestellt: sie sollten die Viskositäten der wäßrigen Flüssigkeiten auch bei geringen Mengen an zugesetztem Hydrokolloid sehr stark erhöhen bzw. ein stabiles bewegliches Gel ergeben, sie sollten auch in Salzlösungen löslich sein und möglichst nicht in ihnen ausflocken und damit unwirksam werden, da in den unterirdischen Formationen häufig lösliche Salze anzutreffen sind bzw. die einzubringenden Flüssigkeiten bereits salzhaltig sind, und die vorgegebene oder ›vor Ort‹ erzeugte Viskosität bzw. das erzeugte Gel sollten über längere Zeiträume bis zu höheren Temperaturen und bei hohen Scherwerten, d. h. Bedingungen, wie sie in den unterirdischen Formationen anzutreffen sind, stabil sein.

In den folgenden Ausführungen werden die Begriffe aus dem Gebiet der Kolloidchemie so verwendet, wie sie in Römpps Chemie-Lexikon, Franckh'sche Verlagsbuchhandlung — Stuttgart, 7. Auflage — 1976, Stichwörter ›Gele‹ und ›Kolloidchemie‹, Seite 1244 und Seiten 1821 bis 1827 definiert sind; insbesondere ist mit einem Gel ein Zustand gemeint, bei dem zwischen dem festen, kolloidal zerteilten Celluloseether noch Flüssigkeitsmoleküle (normalerweise Wassermoleküle) angeordnet sind, andere Bezeichnungen dafür sind auch Lyogel (Hydrogel) oder Gallerte. Es ist bekannt, daß die Stabilität solcher Gele u. a. auch eine Funktion des pH-Wertes des Systems oder von der Anwesenheit von Fremdionen ist.

Aus dem Stand der Technik sind zur Herstellung von stabilen Celluloseether-Gelen und/oder deren Anwendung beispielsweise folgende Druckschriften bekannt geworden:

In Ullmanns Encyklopädie der technischen Chemie, Verlag Chemie — Weinheim, 4. Auflage — 1975, Band 9, Stichwort ›Celluloseäther‹, Seiten 192 ff. wird ausgeführt (Seite 196), daß Salze einen erheblichen Einfluß auf den Gelpunkt der Celluloseetherlösungen ausüben; insbesondere sollen mehrwertige Kationen wie $Al^{3+}$- oder $Cu^{2+}$-Ionen bis zur quantitativen Fällung von NaCMC aus ihren wäßrigen Lösungen führen können (Seiten 197 und 211). Lösungen von typischen wasserlöslichen Celluloseethern sind im allgemeinen strukturviskos, d. h. ihre Viskosität ist von der Scherkraft bzw. dem Schergefälle abhängig (Seite 199), was insbesondere bei höherviskosen Celluloseether-Typen von der Meßmethode abhängige, unterschiedliche Viskositätswerte liefert. Nur bei sehr niedrigviskosen Celluloseethertypen wird auch newtonsches Fließverhalten gefunden.

Aus der DE-AS 1 147 751 ist ein Verfahren zur Herstellung von Gelen solcher Celluloseether bekannt, die Carboxymethylgruppen als Substituenten tragen, wobei wäßrige Lösungen dieser Celluloseether mit Aluminiumalkoholaten von gesättigten aliphatischen Alkoholen umgesetzt werden. Die Gelbildung soll bei schwach-sauren pH-Werten (z. B. von 4 bis 5) begünstigt sein. Bei einer zu geringen Menge an zugegebenem Aluminiumalkoholat soll lediglich eine Viskositätserhöhung eintreten, eine Menge von 12% (auf trockenen Celluloseether bezogen) wird als ausreichend zur Gelbildung angesehen; die entstehenden Gele sind zur Herstellung von Filmen, Zahnabdruckmassen oder Engoben geeignet. Es wird bei der Abhandlung des Standes der Technik auch eine Umsetzung der Celluloseether mit $Cr^{3+}$-Ionen unter Gelbildung erwähnt. Als für das Verfahren geeignete Celluloseether werden NaCMC, CMC und NaCMHEC genannt.

Die 2,3-Dihydroxypropylgruppen als Substituenten aufweisenden reinen oder gemischten Celluloseether gemäß der DE-OS 2 415 154 oder der DE-OS 2 415 155 (= US-PS 4 001 210) können mit Borationen liefernden Verbindungen wie Borsäure, Boraten oder leichthydrolysierbaren Borsäureestern zu hochviskosen Produkten oder auch zu stabilen Gelen umgesetzt werden. Die Umsetzung mit den Borationen erfolgt entweder im alkalischen Reaktionsmedium oder durch Zugabe von Boraten zu wäßrigen Lösungen der Celluloseether.

In dem Verfahren zur Herstellung einer verdickten, wäßrigen Salzlösung nach der DE-OS 2 639 620 (= US-PS 4 035 195) werden CMHEC-Typen eines $DS_{CM}$ von 0,2 bis 0,6 und eines $MS_{HE}$ von 1,5 bis 3,0 in wäßriger Lösung mit mehrwertigen Metallkationen vernetzt. Die Konzentration des Cellulosemischethers in der Lösung liegt bei 0,025 bis 1% und das Molverhältnis der Metallionen zu den Carboxylgruppen des Celluloseethers bei 0,02 bis 1. Als Metallkationen sollen $Fe^{3+}$, $Al^{3+}$, $Cr^{3+}$ und $Zr^{4+}$ geeignet sein, wobei die damit vernetzten Celluloseether höherviskose Lösungen und auch stabile Gele ergeben können. Als Anwendungsgebiet wird die Sekundärförderung von Erdöl genannt, wobei die unterirdisch vorkommenden Salzlösungen verdickt werden müssen.

In der DE-OS 2 928 247 (= US-PS 4 183 765) wird ein Verfahren zur Erhöhung der Viskosität einer wäßrigen HAlkC-Lösung beschrieben, bei dem die wäßrige Lösung mindestens 0,075 Gew.-% des Celluloseethers enthält, dieser Lösung (bezogen auf das Gewicht des Celluloseethers) 0,4 bis 75% Benzochinon zugegeben werden und diese Lösung dann einen pH-Wert von über 6,4 aufweist; neben HEC oder HPC sollen auch deren Mischether (z. B. HECMC) in ihrer Viskosität beeinflußt werden können.

Aus der US-PS 2 420 949 ist die Herstellung geformter Produkte (Fasern, Bänder oder Folien) auf der Basis von alkali-, wasser- und säureunlöslicher CAlkC bekannt, wobei an sich die freie Säureform der Celluloseether vorliegt, in der jedoch zumindest ein Teil der Carboxylgruppen durch $Zr^{4+}$- oder $ZrO^{2+}$-Ionen vernetzt ist und der Gehalt an Zr-Ionen (berechnet als $ZrO_2$) im vernetzten Celluloseether 3 bis 9% beträgt.

Die reinen oder gemischten, mindestens 1,4 Dihydroxypropylgruppen pro Anhydro-o-glucose-Einheit enthaltenden Celluloseether gemäß der US-PS 4 096 326 sind wasserlöslich und thermoplastisch und können mit 0,05 bis 10 Gew.-Teilen Borat- oder Antimonat-Ionen pro Gew.-Teil Celluloseether in Lösung behandelt werden. Die dabei entstehenden Celluloseether-Borat- oder Celluloseether-Antimonat-Komplexe zeigen in wäßriger Lösung eine gegenüber den unbehandelten Celluloseethern stark erhöhte Viskosität, die auch in Salzlösungen bestehen bleibt oder dort sogar höher ist. Derartig modifizierte Produkte sollen beispielsweise in der Sekundärförderung von Erdöl eingesetzt werden.

Im Verfahren zur gelbildenden Verfestigung von Bohrspülungen nach der DE-PS 2 109 823 werden CMC (als Prototyp eines carboxymethylgruppenhaltigen Polymeren) enthaltenden Systemen ›vor Ort‹ wäßrige Lösungen von sauer reagierenden Metallsalzen mehrwertiger Kationen wie $Al^{3+}$, $Fe^{3+}$, $Cr^{3+}$

oder $Cu^{2+}$ zugesetzt. Die Bohrspüllösungen selbst werden im allgemeinen neutral oder schwach-alkalisch eingestellt und enthalten 0,2 bis 4 Gew.-% des carboxymethylgruppenhaltigen Polymeren. Die in den Beispielen angegebenen Mengenverhältnisse für das zugegebene Salz liegen bei 0,03 bis 0,2 Gew.-Teilen Salz pro Gew.-Teil Celluloseether.

In der DE-OS 2 544 777 (= GB-PS 1 503 897) wird ein Duftstoffträger auf Basis von mit mindestens dreiwertigen Metallionen vernetzten CMC-Gelen beschrieben. Die Gele enthalten 0,5 bis 10 Gew.-% an CMC und 0,2 bis 5 Gew.-% an Metallsalzen mit $Al^{3+}$, $Fe^{3+}$ oder $Cr^{3+}$-Ionen.

Aus den EP-OS 0 007 012 und EP-OS 0 007 013 sind gelierende Zusammensetzungen für die Sekundärförderung von Erdöl bekannt, die neben Wasser und 0,1 bis 3,0% eines Verdickungsmittels wie einem Celluloseether (z. B. CMC, CEC, CMHEC, HEC, HPC, MHPC, MC, EC, PC, ECMC, MEC oder HPMC) noch etwa 0,001 bis etwa 1% eines Aldehyds und/oder einer phenolischen Komponente enthalten. Diese gelierenden Zusammensetzungen können gegebenenfalls auch noch 0,4 bis 35% einer Säure enthalten.

Das Verfahren zur Verfestigung von Bohrlöchern gemäß der US-PS 2 439 833 wird so durchgeführt, daß entweder eine wäßrige NaCMC-Lösung in die unterirdischen porösen Formationen eines Bohrlochs mit genügender Menge an bestimmten Salzen eingebracht wird oder daß zusätzlich eine wäßrige Lösung dieser Salze, nämlich $FeSO_4$, $FeCl_3$, $Ba(NO_3)_2$, $SnCl_2$, $Pb(CH_3COO)_2$ oder $Al_2(SO_4)_3$ in das Bohrloch eingebracht wird, um die Verfestigung (z. B. durch Gelbildung) zu bewirken. Diese Verfestigung kann durch Zugabe von wasserlöslichen Hydroxiden wie NaOH wieder aufgehoben werden.

Neben Zement und Wasser kann ein Verfestigungsmedium für Bohrlöcher nach der US-PS 3 804 174 ein Reaktionsprodukt aus einem wasserlöslichen Celluloseether und einem mehrwertigen Metallion enthalten. Zu den Celluloseethern zählen HEC, CMC und CMHEC, zu den Metallionen $Zr^{4+}$, $Pb^{2+}$, $Cr^{3+}$, $Fe^{3+}$, $Hf^{4+}$, $La^{3+}$ und $Y^{2+}$, insbesondere $ZrO^{2+}$.

In dem Verfahren zur Verbesserung der Sekundärförderung von Öl durch wäßrige Gele wird in der US-PS 3 971 440 neben Wasser, einem Celluloseether, einem reduzierbaren Metallion und einem Reduktionsmittel für das Metallion auch noch ein Polyacrylamid eingesetzt.

Aus der US-PS 4 018 286 ist ein Verfahren zur Herstellung einer zeitweiligen Verfestigung einer unterirdischen Formation bekannt, bei dem eine Zusammensetzung aus a) einem gelierbaren Polymeren wie einem Celluloseether oder einem Acrylpolymeren und b) einem Komplex aus einem $Fe^{2+}$-, $Fe^{3+}$-, $Al^{3+}$-, $Ti^{4+}$-, $Sn^{2+}$-, $Ca^{2+}$-, $Mg^{2+}$- oder $Cr^{3+}$-Kation und einem zur Komplexierung des Kations geeignetem Anion wie einem Tartrat- oder Citration bei einem pH-Wert von 3 bis 7 gehalten wird, so lange die Verfestigung andauern soll und bei dem dieser pH-Wert zur Aufhebung der Verfestigung wieder erniedrigt oder erhöht wird.

Das Verfahren zur Sekundärförderung von Erdöl gemäß der US-PS 4 096 074 beinhaltet auch die Zugabe einer verdickend wirkenden wäßrigen Lösung eines Reaktionsproduktes eines organischen Polyisocyanats mit einem linearen, nichtionischen Polysaccharidether (z. B. HEC, HPC, MHPC oder HEHPC), wobei das Polyisocyanat als Vernetzungsmittel für den Polysaccharidether wirkt.

Die sehr zahlreichen Veröffentlichungen zeigen, daß es offensichtlich kein universell anwendbares Mittel gibt, das in den verschiedensten Anwendungsgebieten für wäßrige Gele zum Einsatz kommen kann.

Oftmals sind die beschriebenen Gele nur in bestimmten pH-Bereichen stabil und verflüssigen sich bei pH-Wert Änderungen wieder. In einigen Fällen sind komplizierte Zusammensetzungen und/oder teure organische Zusätze erforderlich, um ein Gel zu erzeugen. Um eine wirtschaftliche und problemlose Anwendung zu ermöglichen, insbesondere auf dem Gebiet der Sekundärförderung von Erdöl mit den dort großen Anwendungsmengen, müssen die Gelkomponenten preiswert und einfach zu handhaben sein. Als wirksame Komponenten kamen bisher im wesentlichen die carboxymethylgruppenhaltigen Polysaccharidderivate CMC (NaCMC) oder CMHEC und billige anorganische Salze von mehrwertigen Kationen wie $Al^{3+}$ oder $Cr^{3+}$ in Betracht. Diese Celluloseether bilden aber nur im Neutralbereich stabile Gele, im Alkalischen oder stark Sauren wird mit mehrwertigen Kationen jedoch kein vergelender Effekt erzielt, sondern es kommt zu Trübungen und Ausfällungen des Celluloseethers.

Aufgabe der vorliegenden Erfindung ist es deshalb, eine Zusammensetzung vorzuschlagen, welche wäßrige Gele bilden kann, die den verschiedensten Anforderungen der Praxis genügen und insbesondere bei verschiedensten pH-Wert Bereichen stabil sind.

Die Erfindung geht aus von der bekannten gelbildenden Zusammensetzung auf der Basis von a) Wasser, b) einem wasserlöslichen Cellulosemischether mit mindestens einem nichtionischen Substituenten aus der Gruppe Hydroxyalkyl und Alkyl und mindestens einem anionischen Substituenten und c) einem ein mindestens zweiwertiges Kation aufweisenden Salz. Die erfindungsgemäße gelbildende Zusammensetzung ist dann dadurch gekennzeichnet, daß der wasserlösliche Cellulosemischether als ionischen Substituenten oder als mindestens einen der ionischen Substituenten eine Phosphonoalkylgruppe oder eine P-Alkyl-phosphinoalkylgruppe aufweist.

Die wasserlöslichen phosphorhaltigen Cellulosemischether wurden erstmals in der DE-A 3 039 963 mit dem Titel ›Wasserlösliche Cellulosemischether mit einem Phosphonomethylsubstituenten und ein Verfahren zu ihrer Herstellung‹ bzw. werden erstmals in der DE-A 3 112 945 mit dem Titel ›Celluloseether und Cellulosemischether mit mindestens einem phosphorhaltigen Substituenten und ein Verfahren zu ihrer Herstellung‹ beschrieben.

Die erste der beiden Offenlegungsschriften betrifft wasserlösliche Cellulosemischether mit a) mindestens einem Substituenten aus der Gruppe Alkyl, Hydroxyalkyl, Carboxyalkyl, Sulfoalkyl und Dialkylaminoalkyl und b) einem Phosphonomethylsubstituenten eines DS des oder der ersten von Hydroxyalkyl verschiedenen Substituenten von 0,05 bis 2,95 und/oder eines $MS_{HAlk}$ von 0,5 bis 6,0 und eines $DS_{PM}$ von 0,005 bis 0,8. Insbesondere zählen zu diesen Cellulosemischethern solche, die a) einen Hydroxyethylsubstituenten mit einem $MS_{HE}$ von 0,8 bis 5,0 und b) einen $DS_{PM}$ von 0,01 bis 0,8 aufweisen. Diese Cellulosemischether können hergestellt werden, indem man pro Mol Cellulose 0,1 bis 25 Mol des oder der Veretherungsmittel zur Erzeugung der Substituenten unter a), 0,05 bis 2,0 Mol Halogenmethanphosphonat-Ionen als Veretherungsmittel zur Erzeugung des Substituenten unter b) und 0,8 bis 12,0 Mol Hydroxid-Ionen zur Reaktion bringt, wobei je nach Art des Veretherungsmittels zur Erzeugung des Substituenten unter a) bis zu 30 Gew.-Teile, pro Gew.-Teil Cellulose, eines Gemisches aus einem inerten, bevorzugt mit $H_2O$ mischbaren organischen Lösemittel und $H_2O$, bei einem Wasseranteil von 3 bis 40 Gew.-% zugegen sind. Als Veretherungsmittel kommen u. a. Ethylenoxid und Chlor-methanphosphonsäure oder entsprechende Salzformen in Betracht, und als organisches Lösemittel wird bevorzugt Isopropanol eingesetzt.

Die zweite der beiden genannten Offenlegungsschriften betrifft solche Celluloseether, die mindestens einen phosphorhaltigen Substituenten aufweisen, oder deren Mischether auf der Basis mindestens eines phosphorfreien Substituenten aus der Gruppe Alkyl, Hydroxyalkyl, Carboxyalkyl, Sulfonoalkyl, Aminoalkyl und Dialkylaminoalkyl. Der oder die phosphorhaltigen Substituenten tragen durch die allgemeine Formel

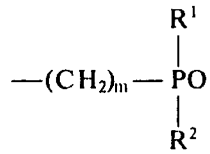

beschriebene Gruppen, in der $R^1$ und $R^2$ = OX, oder $R^1$ = OX und $R^2$ = OY, oder $R^1$ = OX und $R^2 = (CH_2)_n{-}CH_3$, oder $R^1$ und $R^2 = (CH_2)_n{-}CH_3$, oder $R^1 = (CH_2)_n{-}CH_3$ und $R^2 = (CH_2)_p{-}CH_3$ sind, wobei

X, Y gleich oder verschieden sind und ein Wasserstoffatom oder ein einwertiges Kation,
m eine ganze Zahl von 1 bis 4, und
n, p gleich oder verschieden sind und 0 oder 1

bedeuten; ausgenommen sind solche Gruppen, in denen m = 1 oder 2 und $R^1$ und $R^2$ = OX oder $R^1$ = OX und $R^2$ = OY sind. Diese neuen Stoffe sind dann Abkömmlinge von Alkanphosphonsäuren, Alkyl-alkylphosphinsäuren und Alkyl-dialkylphosphanoxiden. Diese Celluloseether können hergestellt werden durch Umsetzung von 0,8 bis 15,0 mol Hydroxid-Ionen, 0,05 bis 3,0 mol Halogenalkanphosphonat-Ionen, Halogenalkyl-alkylphosphinat-Ionen oder Halogenalkyl-dialkylphosphanoxid und — sofern Mischether hergestellt werden sollen — 0,1 bis 25,0 mol des oder der Veretherungsmittel zur Erzeugung des oder der phosphorfreien Substituenten, pro mol Cellulose, wobei im Reaktionsmedium mindestens 5 mol Wasser anwesend sind.

Von den phosphorhaltigen Cellulosemischethern werden bevorzugt solche eingesetzt, bei denen der DS, bezogen auf den phosphorhaltigen Substituenten, im Bereich von 0,01 bis 0,4, insbesondere von 0,02 bis 0,2, ganz besonders von 0,04 bis 0,15, und der Substitutionsgrad ($DS_{Alk}$ bzw. $MS_{HAlk}$), bezogen auf den nichtionischen Substituenten, bei mindestens 1,3 liegen, wobei ein solcher Substitutionsgrad für den nichtionischen Substituenten etwa den Übergang vom wasserunlöslichen zum wasserlöslichen Zustand eines ausschließlich diesen nichtionischen Substituenten tragenden Celluloseethers charakterisiert. Dabei werden die phosphorhaltigen Substituenten dieser Verbindungen zweckmäßig durch die allgemeine Formel (I) für die Phosphonoalkylgruppe und die allgemeine Formel (II) für die P-Alkyl-phosphinoalkylgruppe beschrieben

$-(CH_2)_n-PO_3XY$

(I)

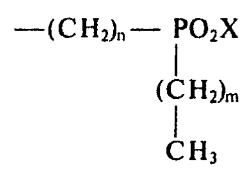

(II)

in denen n = eine ganze Zahl von 1 bis 4, bevorzugt 1 oder 3, m = 0 oder 1, bevorzugt 0 und X und/oder Y = Wasserstoff oder ein einwertiges Kation, bevorzugt $Na^+$ oder $NH_4^+$ bedeuten. Bei dem oder den nichtionischen Substituenten weisen die Hydroxyalkylgruppe 2 bis 4, bevorzugt 2 C-Atome und die Alkylgruppe 1 oder 2, bevorzugt 1 C-Atom(e) auf. Neben mindestens einem phosphorhaltigen Substituenten können die wasserlöslichen Celluloseether als weiteren ionischen Substituenten auch eine Carboxyalkyl- und/oder eine Sulfonoalkylgruppe mit einem DS von maximal 0,3 tragen, wobei die

Carboxymethyl- bzw. Natriumcarboxymethyl- und die Sulfoethylgruppe bevorzugt sind. Es kommen also beispielsweise als geeignete Celluloseether in Betracht: MPMC, EPMC, HEPMC, HE(MPM)C, HPPMC, HECMPMC oder HESEPMC.

Für die Komponente c), das ein mindestens zweiwertiges Kation aufweisende Salz, kommen insbesondere solche Salze in Betracht, die ein Kation aus der Gruppe $Zr^{4+}$, $ZrO^{2+}$, $Ti^{4+}$, $TiO^{2+}$, $Fe^{3+}$, $Al^{3+}$, $Cr^{3+}$, $Pb^{2+}$ und $Ca^{2+}$ enthalten. Als Anionen für diese Kationen kommen zweckmäßig solche in Frage, die zur Wasserlöslichkeit des entsprechenden Salzes führen, dazu zählen – allerdings auch noch abhängig von der Art des Kations – insbesondere Chloride, Sulfate und Nitrate, aber auch Acetate, Sulfite, Nitrite oder Hydrogencarbonate. Die Mengenanteile der Komponenten in der erfindungsgemäßen gelbildenden Zusammensetzung werden bevorzugt so eingestellt, daß das wäßrige System 0,03 bis 10 Gew.-%, insbesondere 0,2 bis 5 Gew.-% der Komponente b), d. h. des wasserlöslichen Cellulosemischethers, und – bezogen auf 1 mol des phosphorhaltigen Substituenten des Cellulosemischethers – 0,2 bis 20 mol, insbesondere 0,5 bis 5,0 mol, besonders bevorzugt 1,0 bis 3,0 mol des Kations der Komponente c) enthält.

Bei der Durchführung eines Verfahrens zur Herstellung eines stabilen Gels aus der erfindungsgemäßen gelbildenden Zusammensetzung wird entweder zu einer wäßrigen Lösung des Cellulosemischethers das Salz in fester Form oder in wäßriger Lösung zugegeben, oder beide festen Komponenten werden trocken vorgemischt und dann in Wasser gelöst, wonach abschließend der zur Gelbildung erforderliche pH-Wert des Systems künstlich eingestellt wird oder durch die Gegebenheiten auf dem Anwendungsgebiet (z. B. eine unterirdische Formation bei der Sekundärförderung von Öl) vorgegeben ist. Zur optimalen pH-Wert Einstellung kann an den verschiedensten Stufen des Verfahrens auch noch ein Puffersalz wie Natriumacetat in fester Form oder in wäßriger Lösung zugesetzt werden. Für die vergelende Wirkung der einzelnen Kationen der Komponente c) auf die phosphorhaltigen Cellulosemischether der Komponente b) kommen im allgemeinen folgende pH-Wert Bereiche in Betracht: $Zr^{4+}$ ($ZrO^{2+}$) für pH $\leq 4$, $Ti^{4+}$ ($TiO^{4+}$) für pH = 4 bis 6, $Fe^{3+}$ oder $Al^{3+}$ für pH = 5 bis 8, $Cr^{3+}$ für pH = 7 bis 9, $Pb^{2+}$ für pH = 8 bis 11 und $Ca^{2+}$ für pH = 10 bis 13. Da der Übergang zwischen einer Lösung und einem Gel fließend sein kann und nicht völlig eindeutig definiert werden kann, soll die Erfindung auch – durch die Salzvernetzung verursacht – stark verdickte Lösungen mitumfassen, d. h. der Ausdruck »gelbildend« soll bedeuten, daß aus den Komponenten der erfindungsgemäßen gelbildenden Zusammensetzung stark verdickte oder bevorzugt vergelte Systeme entstehen können.

Es ist überraschend, daß bereits eine außerordentlich geringe Phosphor-Substitution, beispielsweise ein $DS_{PM}$ von 0,02 in einer HEPMC eines $MS_{HE}$ von 2,4, ausreicht, um im neutralen Medium mit z. B. $Al^{3+}$- oder $Fe^{3+}$-Ionen stabile Gele zu erzeugen. Besonders überraschend ist es, daß die Lösung eines solchen Cellulosemischethers beim Ansäuern bis auf pH-Werte von 0 oder darunter zwar mit z. B. $Al^{3+}$-Ionen nicht mehr vergelt, aber auf Zusatz von Zirkonsalzen wie $ZrOCl_2$ wieder klare und stabile Gele entstehen läßt, die sich nur beim Erhitzen wieder verflüssigen. Im Gegensatz zu den $Al^{3+}$-Ionen enthaltenden Gelen von HEPMC im neutralen Medium, bei denen die Hitzeverflüssigung des Gels beim Abkühlen reversibel wieder zu einem stabilen Gel führt, tritt bei den sauren, hitzeverflüssigten $Zr^{4+}$- oder $ZrO^{2+}$-Ionen enthaltenden Gelen von HEPMC beim Abkühlen keine reversible Vergelung mehr ein, da wahrscheinlich unter der thermischen Belastung eine beschleunigte Säurehydrolyse des Cellulosemischethers mit weitgehendem Kettenabbau stattfindet. Im alkalischen Medium lassen sich ebenfalls Vergelungen erzielen, wenn als vernetzendes Kation z. B. $Ca^{2+}$ (als $CaCl_2$) gewählt wird, wobei das System möglichst frei von Carbonationen sein sollte; insbesondere kann es dann $NH_3$ enthalten, um Fällungen von $Ca(OH)_2$ weitgehend zu verhindern.

Die Tendenz der in der erfindungsgemäßen gelbildenden Zusammensetzung vorhandenen phosphorhaltigen Cellulosemischether zur Gelbildung durch ionogene Vernetzungsreaktionen mit den mindestens zweiwertigen Kationen hängt weitgehend vom Substitutionsgrad der Ethergruppe, von der Art des vernetzenden Kations, von der Konzentration der Komponenten, von der mittleren Kettenlänge (Molekularmasse) des Cellulosemischethers, dem pH-Wert, der Temperatur und dem Gehalt an Fremdelektrolyten im System ab, wobei letztere mit dem vernetzenden Kation und/oder den ionischen Gruppen im Cellulosemischether keine oder nur eine untergeordnete Wechselwirkung (z. B. Fällungs- oder Komplexierungsreaktionen) eingehen dürfen. Beispielsweise kann man davon ausgehen, daß bei Konzentrationen des Cellulosemischethers im wäßrigen System ab etwa 0,5 Gew.-% die Vernetzung mit dem Metallion, bei einem Molverhältnis von Metallion zu phosphorhaltigem Substituenten von mindestens 1, im allgemeinen Gelbildung bewirkt; bei geringeren Konzentrationen an Cellulosemischether und/oder geringeren Molverhältnissen Metallion/P-haltiger Substituent kann auch lediglich ein signifikanter Viskositätsanstieg und/oder thixotropes Verhalten des wäßrigen Systems eintreten. Exakte Grenzen lassen sich aus den vorher angegebenen Gründen (viele Parametereinflüsse) nicht angeben. Wird anstelle von entsalztem oder natürlich vorkommendem Wasser eine erhöhte Menge an gelösten Salzen enthaltende wäßrige Lösung zur Auflösung des Cellulosemischethers verwendet, so kann noch ein synergistischer Effekt eintreten, der die Tendenz zur Vergelung zusätzlich stark steigern kann. Beispielsweise bei HEPMC/$Al^{3+}$-Gemischen ist dieser Effekt insbesondere beim Einsatz von NaCl, in geringerem Maße auch mit K-Salzen zu beobachten.

Die erfindungsgemäße Zusammensetzung eignet sich zur Herstellung stark verdickter oder insbesondere vergelter wäßriger Systeme, die in steigendem Maße bevorzugt in der Erdölfördertechnik bei der

Sekundärförderung von Erdöl Verwendung finden, wo bei Einsatz der erfindungsgemäßen Zusammensetzung dort dann nur geringe Mengen an wasserlöslichem Polymer benötigt werden. Die erfindungsgemäße Zusammensetzung ist beispielsweise den bisher bekannten HECMC-Systemen überlegen, da stabile Vergelungen auch bereits bei sehr niedrigen Substitutionsgraden an ionischem Substituenten eintreten und bei Einsatz von Zirkonsalzen als vernetzendem Reagens auch das Arbeiten bei stark sauren pH-Werten möglich ist.

Es wurde darüber hinaus eine Methode gefunden, um die entstehenden Gele ohne Temperatur- oder pH-Wert Änderung reversibel mehrere Male zu verflüssigen und wieder neu zu erzeugen. Bei diesem Verfahren zur reversiblen Aufhebung des — wie vorher beschrieben hergestellten — Gels gibt man zu dem Gel eine zu seinem Gehalt an vernetzendem, mehrwertigem Kation stöchiometrisch mindestens gleiche Menge eines bei dem vorhandenen pH-Wert ohne oder mit nur geringer pH-Wert Beeinflussung das Kation komplexierenden Mittels, insbesondere eine zum Gehalt an $Al^{3+}$-, $Fe^{3+}$-, $Zr^{4+}$- oder $ZrO^{2+}$-Ionen mehr als stöchiometrische Menge an Fluoridionen in Form einer wäßrigen Lösung eines Alkali- oder Ammoniumfluorids. Es kann davon ausgegangen werden, daß in den dabei entstehenden beispielsweise Hexafluorkomplexen das mehrwertige Metallkation gebunden wird, wodurch seine für den Cellulosemischether vernetzende Funktion zurückgeht bzw. vollständig wieder aufgehoben wird (Gelverflüssigung). Es kommt bei diesem Verfahren nicht zu wesentlichen, sonst häufig auftretenden pH-Wert Änderungen, die teilweise von in der Praxis häufig störenden Fällungen schwerlöslicher Metallsalze begleitet sind. Wird eine erneute Erzeugung eines stabilen Gels gewünscht, so kann ein stöchiometrischer Überschuß an entsprechenden mehrwertigen Metallionen in Salzform wieder dem wäßrigen System zugesetzt werden, um eine erneute Vernetzung zu bewirken. Dieser Vorgang des Aufhebens und Wiedererzeugens des Gels kann einige Male wiederholt werden.

Mit den Phosphonoalkyl- bzw. P-Alkyl-phosphinoalkylgruppen enthaltenden Cellulosemischethern, in Verbindung mit mindestens zweiwertigen Kationen, stehen somit neue verdickende bzw. vergelende wäßrige Systeme, deren Eigenschaften unter verschiedenartigsten Bedingungen genutzt werden können, zur Verfügung.

In den folgenden Beispielen sind die %-Angaben in Gew.-% zu verstehen, Gew.-Teile verhalten sich zu Vol.-Teilen wie g zu $cm^3$. Die angegebenen Viskositäten wurden im Höppler-Kugelfallviskosimeter bei 20°C in wäßriger Lösung mit den jeweils angegebenen Konzentrationen bestimmt.

## Beispiel 1

Das Beispiel zeigt den verschiedenartigen Einfluß mehrwertiger Metallkationen auf die Viskosität einer verdünnten Lösung von HEPMC im Neutralbereich. 4,5 Gew.-Teile einer HEPMC eines $MS_{HE}$ von 2,48 und eines $DS_{PM}$ von 0,02 werden mit Wasser zu 810 Gew.-Teilen gelöst. Portionen dieser Lösung von je 90 Gew.-Teilen werden jeweils mit 1 Gew.-Teil wäßriger Lösung des Metallsalzes, die 0,047 mmol des entsprechenden Kations pro g Lösung enthält, versetzt, mit festem Na-acetat auf einen pH-Wert von 6,0 gebracht und mit Wasser auf 100 Gew.-Teile aufgefüllt. Es resultieren 0,5%ige Lösungen des Cellulosemischethers, die 0,037 mmol Phosphonsäuregruppen pro 100 g Lösung enthalten. Das Molverhältnis mehrwertiges Metallkation zu phosphorhaltigem Substituenten in der wäßrigen Lösung beträgt 1,3.

Tabelle I

| Metallsalz | Mehrwertiges Kation | Viskosität (mPa · s) |
|---|---|---|
| — | — | 10 |
| $AlCl_3 \cdot 6\,H_2O$ | $Al^{3+}$ | 28 |
| $CaCl_2 \cdot 2\,H_2O$ | $Ca^{2+}$ | 10 |
| $Cr_2(SO_4)_3 \cdot 18\,H_2O$ | $Cr^{3+}$ | 11 |
| $CuSO_4 \cdot 5\,H_2O$ | $Cu^{2+}$ | 10 |
| $FeCl_3 \cdot 6\,H_2O$ | $Fe^{3+}$ | 33 |
| $Pb(NO_3)_2$ | $Pb^{2+}$ | 11 |
| $ZrOCl_2 \cdot 8\,H_2O$ | $Zr^{4+}(ZrO^{2+})$ | 12 |

Es wird deutlich, daß im Neutralbereich $Al^{3+}$- und $Fe^{3+}$-Ionen die stärkste vernetzende und damit viskositätserhöhende Wirkung zeigen.

## Beispiel 2

Das Beispiel zeigt die pH-Abhängigkeit einer viskositätserhöhenden Vernetzungsreaktion von HEPMC mit $Al^{3+}$-Ionen in wäßriger Lösung. 13,2 Gew.-teile einer HEPMC nach den Angaben im Beispiel 1 werden zu 850 Gew.-Teilen Lösung mit Wasser gelöst. Je 90 Gew.-Teile dieser Lösung werden mit 2 Gew.-Teilen einer 3%igen wäßrigen Lösung von $KAl(SO_4)_2 \cdot 12\,H_2O$ versetzt. Es werden daraufhin verschiedene Mengen (0,1 bis 1,0 Vol.-Teile) verdünnter wäßriger $NH_3$-Lösung oder 0,1 Volumenteile einer 2 n wäßrigen NaOH-Lösung zugegeben und auf 100 Gew.-Teile mit Wasser aufgefüllt. Es resultieren Lösungen, die 1,4%ig an HEPMC und 0,06 %ig an Salz sind und verschiedene pH-Werte im Bereich 4,5 bis 9,5 zeigen. Das Molverhältnis $Al^{3+}$ zu phosphorhaltigem Substituenten in den Lösungen beträgt in allen Fällen 1,2.

Tabelle II

| pH-Wert der wäßrigen Lösung | Viskosität (mPa · s) |
|---|---|
| 4,5 | 420 |
| 5,2 | 470 |
| 5,9 | 2.300 |
| 6,5 | 22.000 |
| 7,1 | 48.000 |
| 7,9 | 35.000 |
| 8,7 | 2.200 |
| 9,5 | 370 |

Es zeigt sich, daß die vernetzende und viskositätserhöhende Wirkung im Neutralbereich bei einem pH-Wert von etwa 7 ein Maximum erreicht und bei pH $< 5$ und $> 9$ praktisch nicht mehr auftritt.

## Beispiel 3

Das Beispiel zeigt den Einfluß von Fremdelektrolyten in einer wäßrigen HEPMC-Lösung auf den viskositätserhöhenden Vernetzungseffekt mit $Al^{3+}$-Ionen. Eine HEPMC nach den Angaben des Beispiels 1 wird in verschiedenen Salzlösungen in einer Konzentration von 0,5%, bezogen auf die entsprechende Salzlösung, gelöst und auf einen pH-Wert von 6,3 eingestellt. Nach Zugabe von jeweils 0,021 Gew.-Teilen $KAl(SO_4)_2 \cdot 12\,H_2O$ zu 100 Gew.-Teilen der Lösungen (entsprechend einem Molverhältnis von $Al^{3+}$ zum phosphorhaltigen Substituenten von 1,3 in der Lösung) werden die Viskositäten gemessen.

Tabelle III

| Fremdelektrolyt | Konzentration (%) des Fremdelektrolyten | Viskosität (mPa · s) |
|---|---|---|
| – | – | 28 |
| KCl | 7,0 | 30 |
| $KNO_3$ | 7,0 | 38 |
| $KNO_3$ | 12,0 | 28 |
| $Na_2SO_4$ | 2,8 | 35 |
| $Na_2SO_4$ | 7,0 | 31 |
| $MgSO_4$ | 1,8 | 27 |
| NaCl | 1,0 | 32 |
| NaCl | 2,0 | 44 |
| NaCl | 4,0 | 52 |
| NaCl | 7,0 | 64 |
| NaCl | 10,0 | 69 |
| NaCl | 16,0 | 77 |

Es wird ersichtlich, daß insbesondere NaCl die viskositätserhöhende Wirkung der $Al^{3+}$-Vernetzung von HEPMC stark unterstützt, während die anderen aufgeführten Salze nur schwache oder keine Effekte zeigen.

Beispiel 4

Das Beispiel zeigt die Vernetzungswirkung verschiedener Metallkationen auf die Lösungen von HEPMC bei unterschiedlichen pH-Werten. Zu 50 Gew.-Teilen der 1%igen wäßrigen Lösung einer HEPMC mit einem $MS_{HE}$ von 1,92 und einem $DS_{PM}$ von 0,02 in reinem Wasser, die weder Thixotropieerscheinungen noch gallertartige Strukturen zeigt, werden geringe Mengen der Salze mehrwertiger Kationen (als 0,1 m Lösungen) zugegeben. Danach wird durch einige Tropfen konzentrierter bzw. verdünnter Säuren oder Basen (HCl, Essigsäure, wäßrige $NH_3$-Lösung oder wäßrige NaOH-Lösung) der pH-Wert eingestellt, bis die maximale Gel(Gallert)struktur auftritt. Die Ausgangslösung enthält 2,0 mmol HEPMC, entsprechend 0,04 mmol Phosphonomethylgruppen, pro 50 g Lösung. In der Tabelle IV sind die Salze nach Art und Menge, die pH-Werte und die Vernetzungseffekte aufgeführt.

Tabelle IV

| Salz mit mehrwertigem Kation | | | pH-Wert | Struktur des wäßrigen Systems |
|---|---|---|---|---|
| Art | Kation | mmol Kation pro mmol P-Gruppe | | |
| $KAl(SO_4)_2$ | $Al^{3+}$ | 1,25 | 7,0 | stabiles Gel |
| $KAl(SO_4)_2$ | $Al^{3+}$ | 1,25 | 4,0 | wie Ausgangslösung |
| $Fe_2(SO_4)_3$ | $Fe^{3+}$ | 1,00 | 6,5 | thixotrope Lösung |
| $Fe_2(SO_4)_3$ | $Fe^{3+}$ | 3,00 | 7,0 | stabiles Gel |
| $Cr_2(SO_4)_3$ | $Cr^{3+}$ | 3,75 | 6,0 | schwache Gelstruktur |
| $Cr_2(SO_4)_3$ | $Cr^{3+}$ | 3,75 | 8,5 | stabiles Gel |
| $TiOSO_4$ | $TiO^{2+}$ | 3,75 | 4,5 | stabiles Gel |
| $TiOSO_4$ | $TiO^{2+}$ | 3,75 | 1,5 | wie Ausgangslösung |
| $ZrOCl_2$ | $ZrO^{2+}$ | 0,75 | 6,0 | wie Ausgangslösung |
| $ZrOCl_2$ | $ZrO^{2+}$ | 0,75 | 4,0 | schwach thixotrope Lösung |
| $ZrOCl_2$ | $ZrO^{2+}$ | 2,50 | 4,0 | stabiles Gel |
| $ZrOCl_2$ | $ZrO^{2+}$ | 2,50 | 1,0 | stabiles Gel |
| $Pb(NO_3)_2$ | $Pb^{2+}$ | 1,25 | 6,5 | wie Ausgangslösung |
| $Pb(NO_3)_2$ | $Pb^{2+}$ | 1,25 | 9,0 | stabiles Gel |
| $Pb(NO_3)_2$ | $Pb^{2+}$ | 1,25 | 12,5 | wie Ausgangslösung |
| $CaCl_2$ | $Ca^{2+}$ | 2,50 | 6,5 | wie Ausgangslösung |
| $CaCl_2$ | $Ca^{2+}$ | 2,50 | 11,5 | stabiles Gel |

Es zeigt sich, daß 3wertige Kationen wie $Cr^{3+}$, $Fe^{3+}$ und $Al^{3+}$ im Neutralbereich die stärkste Vernetzungswirkung besitzen, während die Salze 4wertiger Kationen wie $TiOSO_4$ und $ZrOCl_2$ ihre vernetzende Wirkung in saurem Medium, 2wertige Kationen wie $Ca^{2+}$ und $Pb^{2+}$ in basischem Medium entfalten.

Wird HEPMC 1%ig in starker Säure wie 15%iger wäßriger HCl-Lösung gelöst, läßt sich auf die angegebene Art durch Zugabe von $ZrOCl_2$ (fest oder als Lösung) ebenfalls ein stabiles Gel erzielen (pH-Wert = −0,6).

## Beispiel 5

Das Beispiel zeigt die Vergelungstendenzen verschiedener phosphorhaltiger anionaktiver Cellulosemischether mit $Al^{3+}$-Ionen in neutralem Medium. 50 Gew.-Teile von 2%igen wäßrigen Lösungen verschiedener Celluloseether, die weder thixotrope noch gallertartige Erscheinungen zeigen, werden mit einem festen Gemisch aus $KAl(SO_4)_2 \cdot 12\,H_2O$ und Na-acetat im Gew.-Verhältnis von 1 : 1 versetzt. Es resultieren in ihrer Rheologie veränderte Lösungen mit pH-Werten von 6,5. Die Substitutionsgrade der Cellulosemischether, die Art der Ethersubstituenten, die nötigen $Al^{3+}$-Ionen-Zusätze sowie die Erscheinungsbilder der wäßrigen Systeme sind in Tabelle V aufgeführt.

Tabelle V

| Art des Mischethers | Phosphorhaltiger Substituent Formel | DS | Weitere(*) Substituent(en) Formel | DS bzw. MS | Molverhältnis | Struktur des wäßrigen Systems |
|---|---|---|---|---|---|---|
| HEPMC | $-CH_2-PO_3HNa$ | 0.15 | $-CH_2-CH_2-OH$ | 1,64 | 1,1 | klares stabiles Gel |
| HEPMC | $-CH_2-PO_3HNa$ | 0.075 | $-CH_2-CH_2-OH$ | 2,55 | 2.0 | klares stabiles Gel |
| HEPPC | $-(CH_2)_3-PO_3HNa$ | 0,17 | $-CH_2-CH_2-OH$ | 2,03 | 1,4 | trübes stabiles Gel |
| HEPPC | $-(CH_2)_3-PO_3HNa$ | 0,06 | $-CH_2-CH_2-OH$ | 1.94 | 1,5 | klares stabiles Gel |
| HPPMC | $-CH_2-PO_3HNa$ | 0,22 | $-CH_2-CH-OH$<br>\|<br>$CH_3$ | 1.14 | 1,1 | schwache Gelstruktur |
| HE(MPP)C | $-(CH_2)_3-PO_2Na$<br>\|<br>$CH_3$ | 0,14 | $-CH_2-CH_2-OH$ | 1.46 | 1,1 | klares sehr steifes Gel |
| HE(MPM)C | $-CH_2-PO_2Na$<br>\|<br>$CH_3$ | 0.01 | $-CH_2-CH_2-OH$ | 1.80 | 5,0 | thixotrope Lösung |
| HECMPMC | $-CH_2-PO_3HNa$ | 0.04 | $-CH_2-CH_2-OH$<br>$-CH_2-COONa$ | 1.32<br>0.20 | 1.5 | leicht trübes stabiles Gel |
| MHEPMC | $-CH_2-PO_3HNa$ | 0,01 | $-CH_3$<br>$-CH_2-CH_2-OH$ | 1.41<br>0,18 | 4,0 | thixotrope Lösung |

*) $Al^{3+}$ zu phosphorhaltigem Substituenten in der Lösung.

Es zeigt sich, daß in allen Fällen Vernetzungserscheinungen durch $Al^{3+}$-Ionen auftreten, wobei bei sehr niedriger P-Substitution (DS 0,01) auch bei großem $Al^{3+}$-Überschuß nur thixotrope Lösungen erhalten werden.

## Beispiel 6

Das Beispiel erläutert die Herstellung und Anwendung eines HEPMC-haltigen Gemisches, das beim Auflösen ohne nachträgliche Zusätze ein stabiles Gel bildet. 9,0 Gew.-Teile einer HEPMC (eines $DS_{PM}$ von 0,11 und eines $MS_{HE}$ von 1,90, Viskosität in einer Konzentration von 2% beträgt 15 mPa · s) werden zusammen mit 1,8 Gew.-Teilen $KAl(SO_4)_2 \cdot 12\,H_2O$ und 1,5 Gew.-Teilen wasserfreiem Na-acetat in einer Pulvermühle innig vermischt. Beim Einrühren von 1,5 Gew.-Teilen des Gemisches in 50 Gew.-Teile Leitungswasser resultiert ein klares Gel, das 2,1 % HEPMC enthält und einen pH-Wert von 6,0 aufweist.

## Beispiel 7

Das Beispiel zeigt die wiederholbare Gelbildung und Gelaufhebung mittels Aluminium- bzw. Zirkon-Salzen bei nachfolgender Komplexierung des Metallkations durch Fluoridzusatz.

a) Man versetzt 100 Gew.-Teile einer 1%igen wäßrigen Lösung von HEPMC ($MS_{HE}$ von 1,64, $DS_{PM}$ von 0,15), die weder Thixotropie noch Gelstruktur zeigt, mit 0,5 Gew.-Teilen eines Gemisches aus $KAl(SO_4)_2 \cdot 12\,H_2O$ und Na-acetat im Gew.-Verhältnis von 3 zu 2. Es resultiert ein klares stabiles Gel. Nach Zusatz von 2,5 Vol.-Teilen einer 10%igen wäßrigen NaF-Lösung ist die Gelstruktur verschwunden, die Lösung zeigt nur noch geringe Thixotropie. Auf erneuten Zusatz von 0,8 Gew.-Teilen des Alaun/Acetat-Gemisches wird wieder ein stabiles Gel erzeugt, das durch Zugabe von weiteren 3,5 Vol.-Teilen der NaF-Lösung erneut verflüssigt wird. Die auftretenden pH-Wert-Änderungen durch die aufeinanderfolgenden Zusätze sind gering und bewegen sich im Bereich von 5,6 bis 6,5. Gelbildungen und -aufhebungen erfolgen jeweils innerhalb von 30 sec nach den entsprechenden Zugaben unter kräftigem Rühren.

b) 100 Gew.-Teile einer Lösung wie in a) werden mittels einer konzentrierten wäßrigen HCl-Lösung auf einen pH-Wert von 1,1 gebracht. Nach Einrühren von 0,4 Gew.-Teilen $ZrOCl_2 \cdot 8\,H_2O$ entsteht ein klares stabiles Gel. Es werden daraufhin 5 Vol.-Teile der NaF-Lösung wie in a) zugegeben, wobei eine nur noch sehr schwach thixotrope Lösung resultiert. Nach erneuter Zugabe von 0,4 Gew.-Teilen $ZrOCl_2 \cdot 8\,H_2O$ wird das Gel rückgebildet, hierauf werden nochmals 6,6 Vol.-Teile NaF-Lösung zugegeben, wobei wieder eine schwach thixotrope Lösung entsteht. Nach weiterer Zugabe von 3 Vol.-Teilen NaF-Lösung ist die Thixotropie gänzlich verschwunden.

## Patentansprüche

1. Gelbildende Zusammensetzung auf der Basis von a) Wasser, b) einem wasserlöslichen Cellulosemischether mit mindestens einem nichtionischen Substituenten aus der Gruppe Hydroxyalkyl und Alkyl und mindestens einem anionischen Substituenten und c) einem ein mindestens zweiwertiges Kation aufweisenden Salz, dadurch gekennzeichnet, daß der wasserlösliche Cellulosemischether als ionischen Substituenten oder als mindestens einen der ionischen Substituenten eine Phosphonoalkylgruppe oder eine P-Alkyl-phosphinoalkylgruppe aufweist.

2. Zusammensetzung nach Anspruch 1, dadurch gekennzeichnet, daß der DS des Celluloseethers, bezogen auf den phosphorhaltigen Substituenten, im Bereich von 0,01 bis 0,4 und der Substitutionsgrad, bezogen auf den nichtionischen Substituenten, der $DS_{Alk}$ bzw. der $MS_{HAlk}$, bei mindestens 1,3 liegen.

3. Zusammensetzung nach Anspruch 1 oder 2, dadurch gekennzeichnet, daß der Cellulosemischether als weiteren ionischen Substituenten neben mindestens einem phosphorhaltigen Substituenten auch eine Carboxyalkyl- und/oder eine Sulfonoalkylgruppe mit einem DS von maximal 0,3 aufweist.

4. Zusammensetzung nach einem der Ansprüche 1 bis 3, dadurch gekennzeichnet, daß das Salz ein zwei-, drei- oder vierwertiges Kation aus der Gruppe $Zr^{4+}$, $ZrO^{2+}$, $Ti^{4+}$, $TiO^{2+}$, $Fe^{3+}$, $Al^{3+}$, $Cr^{3+}$, $Pb^{2+}$ und $Ca^{2+}$ enthält.

5. Zusammensetzung nach einem der Ansprüche 1 bis 4, dadurch gekennzeichnet, daß sie 0,03 bis 10 Gew.-% des Cellulosemischethers und, bezogen auf 1 mol des phosphorhaltigen Substituenten im Cellulosemischether, 0,2 bis 20 mol eines mindestens zweiwertigen Kations enthält.

6. Zusammensetzung nach einem der Ansprüche 1 bis 5, dadurch gekennzeichnet, daß in der Phosphonoalkylgruppe der allgemeinen Formel (I) und der P-Alkyl-phosphinoalkylgruppe der allgemeinen Formel (II)

$$-(CH_2)_n-PO_3XY \quad (I) \qquad -(CH_2)_n-PO_2X-(CH_2)_m-CH_3 \quad (II)$$

n = eine ganze Zahl von 1 bis 4, bevorzugt 1 oder 3, m = 0 oder 1, bevorzugt 0 und X und/oder Y = Wasserstoff oder ein einwertiges Kation, bevorzugt $Na^+$ oder $NH_4^+$ bedeuten.

7. Zusammensetzung nach einem der Ansprüche 1 bis 6, dadurch gekennzeichnet, daß bei dem oder den nichtionischen Substituenten die Hydroxyalkylgruppe 2 bis 4, bevorzugt 2 C-Atome und die Alkylgruppe 1 oder 2, bevorzugt 1 C-Atom(e) aufweist.

8. Verfahren zur Herstellung eines Gels aus der Zusammensetzung nach einem der Ansprüche 1 bis 7, dadurch gekennzeichnet, daß zu einer wäßrigen Lösung des mindestens einen phosphorhaltigen Substituenten aufweisenden wasserlöslichen Cellulosemischethers das Salz in fester Form oder in wäßriger Lösung zugegeben wird, oder beide festen Komponenten trocken vorgemischt werden und der zur Gelbildung erforderliche pH-Wert des Systems eingestellt oder vorgegeben wird.

9. Verfahren nach Anspruch 8, dadurch gekennzeichnet, daß zu einzelnen Komponenten des Gemisches oder in das fertige Gemisch vor der Gelbildung zusätzlich ein pufferndes Salz eingemischt wird.

10. Verfahren zur reversiblen Aufhebung des nach Anspruch 8 oder 9 hergestellten Gels, dadurch gekennzeichnet, daß man zu dem Gel eine zu seinem Gehalt an mehrwertigem Kation stöchiometrisch mindestens gleiche Menge eines bei dem vorhandenen pH-Wert ohne oder mit nur geringer pH-Wert Beeinflussung des Kation komplexierenden Mittels zugibt.

11. Verfahren nach Anspruch 10, dadurch gekennzeichnet, daß man zu dem Gel eine zu seinem Gehalt an $Al^{3+}$-, $Fe^{3+}$-, $Zr^{4+}$- oder $ZrO^{2+}$-Ionen mehr als stöchiometrische Menge an Fluoridionen in Form einer wäßrigen Lösung eines Alkali- oder Ammoniumfluorids zugibt.

12. Verwendung der gelbildenden Zusammensetzung nach einem der Ansprüche 1 bis 7 bei der Sekundärförderung von Erdöl.

**Claims**

1. A gel-forming composition based on a) water, b) a water-soluble cellulose mixed ether having at least one nonionic substituent from the group comprising hydroxyalkyl and alkyl and at least one anionic substituent and c) a salt containing a cation which is at least divalent, wherein the water-soluble cellulose mixed ether has a phosphonoalkyl group or a P-alkylphosphinoalkyl group as the ionic substituent or as at least one of the ionic substituents.

2. The composition as claimed in claim 1, wherein the DS of the cellulose ether, relative to the phosphorus-containing substituent, is within the range from 0.01 to 0.4 and the degree of substitution, relative to the nonionic substituent, the $DS_{Alk}$ or the $MS_{HAlk}$, is at least 1.3.

3. The composition as claimed in claim 1 or 2, wherein the cellulose mixed ether also has as a further ionic substituent, in addition to at least one phosphorus-containing substituent, a carboxyalkyl group and/or a sulfonoalkyl group having a DS of at most 0.3.

4. The composition as claimed in any of claims 1 to 3, wherein the salt contains a divalent, trivalent or tetravalent cation from the group comprising $Zr^{4+}$, $ZrO^{2+}$, $Ti^{4+}$, $TiO^{2+}$, $Fe^{3+}$, $Al^{3+}$, $Cr^{3+}$, $Pb^{2+}$ and $Ca^{2+}$.

5. The composition as claimed in any of claims 1 to 4, which contains 0.03 to 10% by weight of the cellulose mixed ether and, relative to 1 mole of the phosphorus-containing substituent of the cellulose mixed ether, 0.2 to 20 moles of a cation which is at least divalent.

6. The composition as claimed in any of claims 1 to 5, wherein, in the phosphonoalkyl group of the general formula (I) and the P-alkylphosphinoalkyl group of the general formula (II)

$$-(CH_2)_n-PO_3XY \quad (I) \qquad -(CH_2)_n-PO_2X-(CH_2)_m-CH_3 \quad (II)$$

n an integer from 1 to 4, preferably 1 or 3; m = 0 or 1, preferably 0; and X and/or Y denote hydrogen or a monovalent cation, preferably $Na^+$ or $NH_4^+$.

7. The composition as claimed in any of claims 1 to 6, wherein the hydroxyalkyl group in the nonionic substituent(s) has 2 to 4, preferably 2, C atoms and the alkyl group has 1 or 2, preferably 1, C atom(s).

8. A process for the preparation of a gel from the composition as claimed in any of claims 1 to 7, which process comprises adding the salt in a solid form or in the form of an aqueous solution to an aqueous solution of the water-soluble cellulose mixed ether which has at least one phosphorus-containing substituent, or premixing the two solid components in the dry state, and adjusting or presetting the pH of the system to the value required for gel formation.

9. The process as claimed in claim 8, wherein a buffering salt is additionally admixed to individual components of the mixture or to the complete mixture, before gel formation.

10. A process for the reversible reversal of the gel prepared according to claim 8 or 9, which process comprises adding to the gel an amount, which stoichiometrically is at least identical to the gel's content of multivalent cation, of an agent which complexes the cation at the given pH value without or with only a small effect on the pH value.

11. The process as claimed in claim 10, wherein an amount of fluoride ions is added in the form of an aqueous solution of an alkali metal fluoride or ammonium fluoride to the gel, which amount is more than stoichiometric compared with the gel's content of $Al^{3+}$ ions, $Fe^{3+}$ ions, $Zr^{4+}$ ions or $ZrO^{2+}$ ions.

12. The use of the gel-forming composition as claimed in any of claims 1 to 7 in the secondary production of petroleum.

**Revendications**

1. Composition formant un gel, à base a) d'eau, b) d'un éther cellulosique mixte soluble dans l'eau ayant au moins un substituant non-ionique du groupe hydroxyalkyle et alkyle et au moins un substituant anionique et c) d'un sel présentant un cation au moins divalent, caractérisé en ce que l'éther cellulosique mixte soluble dans l'eau présente comme substituants ioniques ou comme au moins un des substituant ionique un groupe phosphonoalkyle ou un groupe P-alkyl-phosphinoalkyle.

2. Composition suivant la revendication 1, caractérisée en ce que le DS de l'éther cellulosique, rapporté au substituant phosphoré, est dans l'intervalle de 0,01 à 0,4 et le degré de substitution, rapporté au substituant nonionique, le $DS_{alk}$ ou le $MS_{halk}$, est d'au moins 1,3.

3. Composition suivant les revendications 1 ou 2, caractérisée en ce que l'éther cellulosique mixte présente comme autre substituant ionique, outre au moins un substituant phosphoré, également un groupe carboxyalkyle et/ou un groupe sulfonoalkyle ayant un DS de 0,3 au maximum.

4. Composition suivant l'une des revendications 1 à 3, caractérisée en ce que le sel contient un cation di- ou tri ou tétravalent du groupe $Zr^{4+}$, $ZrO^{2+}$, $Ti^{4+}$, $TiO^{2+}$, $Fe^{3+}$, $Al^{3+}$, $Cr^{3+}$, $Pb^{2+}$ et $Ca^{2+}$.

5. Composition suivant l'une des revendications 1 à 4, caractérisée en ce qu'elle contient 0,03 à 10% en poids de l'éther cellulosique mixte et, pour 1 mole du substituant phosphoré dans l'éther cellulosique mixte, 0,2 à 20 moles d'un cation au moins divalent.

6. Composition suivant l'une des revendications 1 à 5, caractérisé en ce que dans le groupe phosphonoalkyle répondant à la formule générale (I) et le groupe P-alkyle-phosphinoalkyle répondant à la formule générale (II)

$$-(CH_2)_n-PO_3XY$$

(I)

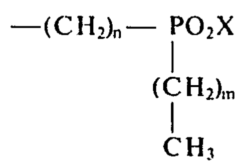

(II)

n désigne un nombre entier de 1 à 4, de préférence 1 ou 3, m = 0 ou 1, de préférence 0 et X et/ou Y = l'hydrogène ou un cation monovalent, de préférence $Na^+$ ou $NH_4^+$.

7. Composition suivant l'une des revendications 1 à 6, caractérisée en ce que dans le ou les substituant(s) non-ioniques, le groupe hydroxyalkyle présente 2 à 4, de préférence 2 atomes de C et le groupe alkyle 1 ou 2, de préférence 1 atome de C.

8. Procédé de préparation d'un gel ayant la composition selon l'une des revendications 1 à 7, caractérisé en ce qu'on ajoute à une solution aqueuse de l'éther cellulosique mixte soluble dans l'eau et présentant au moins un substituant phosphoré le sel sous forme solide ou en solution aqueuse, ou on prémélange à sec les deux constituants solides et on ajuste ou règle à l'avance le pH du système nécessaire pour la formation de gel.

9. Procédé selon la revendication 8, caractérisé en ce qu'on incorpore en outre un sel tampon à divers constituants du mélange ou au mélange fini avant la formation de gel.

10. Procédé de suppression réversible du gel préparé suivant les revendications 8 ou 9, caractérisé en ce qu'on ajoute au gel une quantité stoechiométriquement au moins égale à sa teneur en cation polyvalent d'un agent complexant le cation au pH existant, n'ayant qu'une influence faible ou nulle sur le pH.

11. Procédé suivant la revendication 10, caractérisé en ce qu'on ajoute au gel une quantité plus que stoechiométrique, par rapport à sa teneur en ions $Al^{3+}$, $Fe^{3+}$, $Zr^{4+}$ ou $ZrO^{2+}$, d'ions fluorure sous la forme d'une solution aqueuse d'un fluorure alcalin ou d'ammonium.

12. Utilisation de la composition formant un gel selon l'une des revendication 1 à 7 dans l'extraction secondaire du pétrole.